# EUROPÄISCHE PATENTANMELDUNG

(11) **EP 1 068 988 A1**
(43) Veröffentlichungstag der Anmeldung: **17.01.2001**
(21) Anmeldenummer: 00113043.4
(22) Anmeldetag: 23.06.2000
(51) Int. Cl.: B60N 2/36

(54) **Klappbare Sitzanordnung in einem Kraftfahrzeug**

(30) Priorität: 06.07.1999 DE 19931013
(71) Anmelder: Volkswagen Aktiengesellschaft, 38436 Wolfsburg (DE)
(72) Erfinder: Santelmann, Rainer, 29364 Langlingen (DE)
(74) Vertreter: Schneider, Henry, Dipl.-Ing.

(57) **Zusammenfassung**

Die Erfindung betrifft eine klappbare Sitzanordnung (1) in einem Kraftfahrzeug, die ein Sitzteil (4), eine Sitzlehne (5) sowie eine an der Sitzlehnenrückseite (14) angeordnete Platte (13) umfaßt, wobei die Sitzanordnung (1) aus einer Sitzgebrauchsstellung (2) in eine Ladestellung (3) bringbar ist, in der die Sitzlehne (5) in etwa waagrecht ausgerichtet ist und zusammen mit der aus ihrer Nichtgebrauchsposition in ihre Gebrauchsposition gebrachte Platte (13) eine in etwa waagrechte Ladeebene (17) ausbildet. Erfindungsgemäß ist die Platte (13) verschiebbar an der Sitzlehnenrückseite (14) angeordnet. Insgesamt ergibt sich dadurch eine große Vielfalt und Flexibilität bei der Ausbildung der waagrechten Ladeebene (17) in einem Kraftfahrzeug, die uneingeschränkt sowohl bei Fahrzeugen mit zwei als auch mit drei Sitzreihen verwendbar und einsetzbar ist.

## Beschreibung

Die Erfindung betrifft ein klappbare Sitzanordnung in einem Kraftfahrzeug nach dem Oberbegriff des Anspruchs 1.

Derartige klappbare Sitzanordnungen sind insbesondere in Verbindung mit Kombifahrzeugen oder Kleinbussen bekannt, bei denen es gegenüber den üblichen Limousinen in der Regel erforderlich ist, daß ein Laderaum unter Inkaufnahme eines geringeren Sitzplatzangebots durch Umklappen einer Sitzanordnung geschaffen und/oder vergrößert wird.

Eine gattungsgemäße klappbare Sitzanordnung in einem Kraftfahrzeug ist aus der DE 38 26 959 A1 bekannt. Die Sitzanordnung umfaßt ein Sitzteil, eine Sitzlehne sowie eine an der Sitzlehnenrückseite angeordnete Platte, wobei die Sitzanordnung aus einer Sitzgebrauchsstellung in eine Ladestellung bringbar ist, in der die Sitzlehne in etwa waagrecht ausgerichtet ist und zusammen mit der aus ihrer Nichtgebrauchsposition in ihre Gebrauchsposition gebrachten Platte eine in etwa waagrechte Ladeebene ausbildet.

Konkret ist hier die Platte in der Sitzgebrauchsstellung an der Oberseite der Rücklehne schwenkbar angelenkt. In der Ladestellung ist die Sitzlehne auf das Sitzteil geklappt und in etwa waagrecht ausgerichtet, wobei die Sitzlehne zur Ausbildung einer waagrechten Ladeebene an eine im Abstand zum Fahrzeugboden angeordnete und hinter der Sitzlehne angeordnete waagrechte Abdeckung anschließt. Die an der Sitzlehnenoberseite angelenkte Platte weist in der Ladestellung der Sitzlehne nach oben in Richtung Fahrzeuginnenraum und kann zur weiteren Vergrößerung der Ladeebene nur dann um 180° verschwenkt werden, wenn auch die Sitzlehnen der davor angeordneten Sitze umgeklappt werden.

Mit einer derartigen schwenkbaren Anordnung der Platte bleibt bei nicht umgeklappten Vordersitzen der Freiraum zwischen der umgeklappten Sitzlehnenoberseite und dem davor angeordneten Vordersitz als Ladeebene ungenutzt. Durch die schwenkbare Anlenkung an der Sitzlehne ist ferner die Richtung, in die die Platte zur Ausbildung der Ladeebene schwenkbar ist, stets vorgegeben. Insgesamt ist daher die Einsatzmöglichkeit einer derartigen Platte zur Ausbildung einer vergrößerten in etwa waagrechten Ladeebene hier eingeschränkt. Zudem wird hier die in etwa waagrechte Ladeebene in einem Abstand zum Fahrzeugboden ausgebildet, wodurch das Stauraumvolumen nach oben hin beträchtlich verringert wird.

Aufgabe der Erfindung ist es daher, eine klappbare Sitzanordnung in einem Kraftfahrzeug zu schaffen, bei der eine Vergrößerung einer in etwa waagrechten Ladeebene noch einfacher und schneller sowie mit größerer Vielfalt und Flexibilität möglich ist.

Diese Aufgabe wird mit den Merkmalen des Anspruchs 1 gelöst.

Gemäß Anspruch 1 ist die Platte verschiebbar an der Sitzlehnenrückseite angeordnet.

Durch die Verschiebbarkeit der Platte wird erreicht, daß bei einem nicht umgeklappten Vordersitz auch der Freiraum zwischen der umgeklappten Sitzlehne und dem Vordersitz zur Vergrößerung der Ladeebene genutzt werden kann, da die Platte auch bei nicht umgelegtem Vordersitz bis zur Anlage an den Vordersitz verschiebbar ist. Damit wird hier der zur Verfügung stehende Raum zur Ausbildung einer durchgehenden Ladeebene optimal ausgenutzt. Zudem besteht durch die verschiebbare Anordnung der Platte grundsätzlich auch die Möglichkeit diese zur Ausbildung der verlängerten waagrechten Ladeebene in zwei Richtungen, d.h. in Richtung Sitzlehnenunterseite und in Richtung Sitzlehnenoberseite, verschieben zu können, wodurch größere konstruktive Freiheiten bei der Auslegung des Fahrzeugaufbaus und damit der Ausbildung der Ladeebene gegeben sind. Ferner wird durch die Verschiebbarkeit der Platte erreicht, daß diese je nach gegebener Ladesituation auch in Zwischenpositionen zu der Endverschiebeposition verschiebbar ist. Insgesamt ergibt sich dadurch somit im Gegensatz zur verschwenkbaren Anordnung der Platte eine größere Vielfalt und Flexibilität bei der Ausbildung der waagrechten Ladeebene in einem Kraftfahrzeug, die uneingeschränkt sowohl bei Fahrzeugen mit zwei als auch mit mehr als zwei Sitzreihen verwendbar und einsetzbar ist und zudem einfach herzustellen ist.

In einer bevorzugten Ausführungsform ist in der Ladestellung wenigstens die Sitzlehne der Sitzanordnung mit in Richtung Fahrzeuginnenraum weisender Platte in etwa waagrecht ausgerichtet und in einer Lademulde des Fahrzeugbodens aufgenommen. Grundsätzlich ist es dabei möglich, daß nur die Sitzlehne in der Lademulde aufgenommen wird, während das Sitzteil von der Sitzlehne entkoppelt wird und in eine separate Ladestellung hochgeschwenkt wird. Vorzugsweise ist jedoch sowohl die Sitzlehne als auch das Sitzteil in der Lademulde des Fahrzeugbodens waagrecht ausgerichtet aufgenommen. Durch die Aufnahme der Sitzanordnung in der Lademulde ist sichergestellt, daß nach oben hin ein maximales Laderaumvolumen zur Verfügung gestellt wird. Damit können auch größere und sperrige Gegenstände auf einfache Weise im Fahrzeug verstaut werden.

In einer weiteren bevorzugten Ausführungsform ist an der Sitzlehnenoberseite wenigstens eine Kopfstütze angeordnet. Ferner ist die Platte als Abdeckplatte ausgebildet und in der Ladestellung der Sitzanordnung in etwa waagrecht in Richtung Kopfstützen verschiebbar. Vorzugsweise ist die Abdeckplatte hier bis in den Bereich des die Lademulde umgebenden Fahrzeugbodens verschiebbar, so daß diese den Bereich der Kopfstützen abdeckt und in Verbindung mit wenigstens der waagrecht ausgerichteten Sitzlehne die in etwa waagrechte Ladeebene ausbildet. Durch die Abdeckung der Kopfstützen mit der Platte wird einerseits erreicht, daß eine durchgehende und in etwa waagrechte Ladeebene ausgebildet wird, während andererseits auch sichergestellt ist, daß die Kopfstützen gegen Verschmutzung und Beschädigung geschützt sind. Zur Ausbildung einer durchgehenden in etwa waagrechten Ladeebene mittels wenigstens der Sitzlehne müssen ferner die Kopfstützen nicht mehr abgenommen und separat verstaut werden. Insgesamt wird somit ein Aufbau zur Verfügung gestellt, bei dem eine in etwa waagrechte Ladeebene mit maximalem Stauraumvolumen auf einfache Weise schnell herstellbar ist.

Vorteilhaft sind die Sitzlehne und die an der Sitzlehnenrückseite verschiebbar anliegende Platte sowie ggf. das Sitzteil in der in der Lademulde versenkten Ladestellung mit ihrer in Richtung Fahrzeuginnenraum weisenden Oberfläche in etwa niveaugleich mit dem Fahrzeugboden ausgerichtet. Damit ergibt sich vorteilhaft eine durchgehende waagrechte Ladeebene, bei der das Stauraumvolumen optimal ausgenützt ist.

In einer bevorzugten Ausführungsform ist die Lademulde im hinteren Fahrzeugbodenbereich ausgebildet und in der Breiten- und Längserstreckung der jeweiligen darin versenkbaren Sitzanordnung angepaßt. Insbesondere in Verbindung mit Kleinbussen oder Kombifahrzeugen kann die Sitzanordnung hier eine zweite und/oder dritte Sitzreihe sein, so daß in derartigen Fahrzeugen bei Bedarf auf einfache Weise eine waagrechte Ladeebene ausbildbar ist.

Die Sitzanordnung kann dabei eine ein- oder mehrteilige Rücksitzbank sein, beispielsweise mit einer 1/3-Lehne und/oder einer 2/3-Lehne oder ggf. aber auch nur ein einzelner Fahrzeugsitz sein. Vorzugsweise ist die Sitzanordnung zudem in der Art einer Wickelsitzanordnung angeordnet, bei der neben der Lehne auch das Sitzteil gelenkig an einem fahrzeugseitigen Aufbau angeordnet ist. Mit einer derartigen Wickelsitzanordnung wird erreicht, daß die gesamte Sitzanordnung auf einfache Weise schnell in eine aufrechte Position im Fahrzeug verschwenkbar ist, um einen Laderaum zu schaffen. Mit einer derartigen Ausbildung der Sitzanordnung als Wickelsitzanordnung wird somit erreicht, daß bereits vor dem Übergang in die Ladestellung ein Stauraum geschaffen wird.

Grundsätzlich ist jede Einrichtung, mit der die Sitzanordnung aus der Sitzgebrauchsstellung in die Ladestellung überführbar ist, geeignet. In einer besonders bevorzugten Ausführungsform ist zur Überführung der Sitzanordnung aus der Sitzgebrauchsstellung in die Ladestellung jedoch eine Führungseinrichtung vorgesehen, die wenigstens ein fahrzeugaufbauseitiges Führungselement und wenigstens ein entsprechend zugeordnetes sitzanordnungseitiges Führungselement aufweist.

Beispielsweise ist das wenigstens eine fahrzeugaufbauseitige Führungselement eine sich entlang einer Seite der Lademulde wenigstens über einen Teilbereich derselben erstreckende Führungsschiene, vorzugsweise eine sich über die gesamte Lademuldenlänge erstreckende und nach hinten leicht schräg abfallende Führungsschiene. In einer derartigen Führungsschiene ist das wenigstens eine sitzanordnungsseitige Führungselement, vorzugsweise ein seitlich an einem vorderen Sitzteilende angeordneter Führungszapfen, verschiebbar gehalten und geführt. Mit einer derartigen Führungseinrichtung ist die Überführung der Sitzanordnung aus der Sitzgebrauchsstellung in die Ladestellung auf besonders einfache Weise schnell und sicher möglich. Vorzugsweise ist die Sitzanordnung eine Sitzbankanordnung, so daß die Führungsschienen auf beiden Seiten der Lademulde fahrzeugaufbauseitig vorgesehen sind. Damit ergibt sich insgesamt eine sichere und einfach bedienbare Führung zum Versenken der Sitzanordnung in der Lademulde.

In einer bevorzugten Ausführungsform liegt die Platte an der Sitzlehnenrückseite an und erstreckt sich wenigstens über einen Teilbereich der Sitzlehnenrückseite. Vorzugsweise ist die Platte rechteckförmig ausgebildet und erstreckt sich z.B. über die gesamte Höhe und/oder Breite der Sitzlehnenrückseite. Dadurch entsteht für den Betrachter der Eindruck, als ob die Platte in ihrer Nichtgebrauchsposition die Rücklehnenseite selbst ist, womit ein insgesamt optisch ansprechender Gesamteindruck geschaffen wird. Damit läßt sich die Platte harmonisch in die Innenausstattung des Fahrzeugs integrieren.

Bevorzugt ist die Platte dabei in sitzlehnenseitigen Führungen verschiebbar gehalten, wobei die Platte zudem in ihrer Gebrauchsposition und/oder in ihrer Nichtgebrauchsposition sowie in Zwischenpositionen dazu lösbar festlegbar ist. Die lösbare Festlegung kann dabei vorzugsweise über an sich bekannte Verrastungen und/oder Verriegelungen erfolgen. Grundsätzlich ist die Platte aus jedem denkbaren Material herstellbar. Bevorzugt ist die Platte aus einem Kunststoff hergestellt.

Anhand einer Zeichnung wird die Erfindung näher erläutert.

Es zeigen:
- Fig. 1: eine schematische Darstellung einer Sitzanordnung in einem Kraftfahrzeug, die von einer Sitzgebrauchsstellung in eine Ladestellung überführt wird, und
- Fig. 2: eine schematische Darstellung einer in einer Ladestellung abgesenkten Sitzanordnung mit verschiebbarer Abdeckplatte.

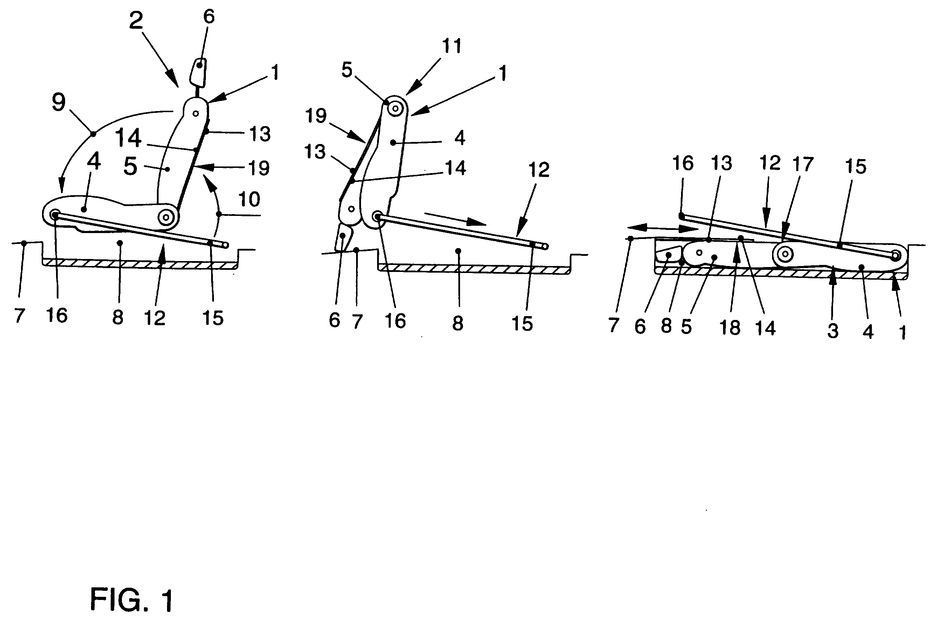

In der Fig. 1 ist schematisch die Überführung einer als Hintersitzanordnung ausgebildeten Sitzanordnung 1 eines Kraftfahrzeugs, vorzugsweise eines Kombikraftfahrzeugs oder eines Kleinbusses, aus einer Sitzgebrauchsstellung 2 in eine Ladestellung 3 schematisch dargestellt.

Wie dies aus der linken Darstellung der Fig. 1 ersichtlich ist, umfaßt die als einteilige Rücksitzbank ausgebildete Sitzanordnung 1 ein Sitzteil 4, eine daran schwenkbar angeordnete Sitzlehne 5 sowie wenigstens eine an der Sitzlehnenoberseite angeordnete Kopfstütze 6. Wie dies aus der linken Darstellung der Fig. 1 weiter ersichtlich ist, ist an der Sitzlehnenrückseite 14 eine dort anliegende Platte 13 als Abdeckplatte angeordnet.

Unterhalb der Sitzanordnung 1 ist im Fahrzeugboden 7 eine Lademulde 8 ausgebildet.

Wie dies aus der linken Darstellung der Fig. 1 mit den Pfeilen 9 und 10 schematisch dargestellt ist, wird für die Überführung der Sitzanordnung 1 aus ihrer Sitzgebrauchsstellung 2 in die Ladestellung 3 zuerst die Sitzlehne 5 entsprechend dem Pfeil 9 auf das Sitzteil 4 geschwenkt. Anschließend kann das Sitzteil 4 entsprechend dem Pfeil 10 in die in der mittleren Darstellung der Fig. 1 dargestellte Wickelposition 11 geklappt werden. In dieser Wickelposition 11 der Sitzanordnung 1 ist bereits ein hinterer Laderaum ausgebildet.

Wie dies in Verbindung mit der mittleren und der rechten Darstellung der Fig. 1 ersichtlich ist, kann die Sitzanordnung 1 über eine Führungseinrichtung 12 in die Ladestellung 3 verschoben werden, bei der die Sitzlehne 5 mit in Richtung Fahrzeuginnenraum weisender Platte 13 und das Sitzteil 4 in etwa waagrecht ausgerichtet in der Lademulde 8 des Fahrzeugbodens 7 aufgenommen ist.

Die Führungseinrichtung 12 umfaßt zwei sich zu beiden Seiten der Lademulde 8 erstreckende, aufbauseitige Führungsschienen 15, von denen hier lediglich eine schematisch und beispielhaft dargestellt ist. Diese Führungsschienen 15 erstrecken sich über die gesamte Länge der Lademulde 8 und fallen nach hinten hin leicht schräg ab. Diesen fahrzeugaufbauseitigen Führungsschienen 15 ist zu beiden Seiten eines vorderen Sitzteilbereichs jeweils ein Führungszapfen 16 als sitzanordnungseitiges Führungselement zugeordnet, über die die Sitzanordnung 1 in den Führungsschienen 15 verschiebbar gehalten und geführt ist.

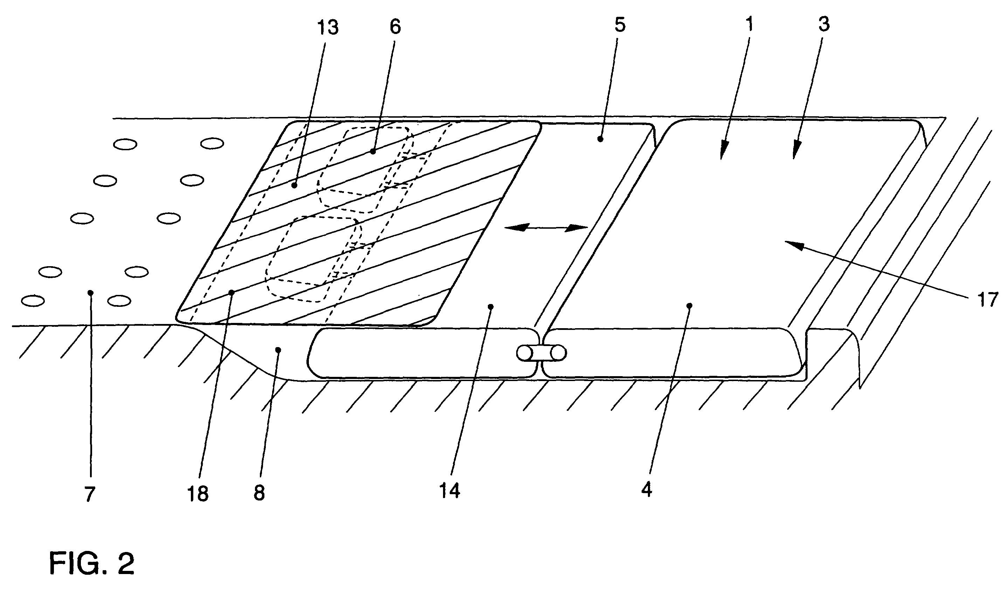

Wie dies insbesondere aus der Fig. 2 ersichtlich ist, die eine schematische, perspektivische Draufsicht auf die Sitzanordnung 1 in der Ladestellung 3 zeigt, wird die in hier nicht dargestellten, sitzlehnenseitigen Führungen verschiebbar gehaltene Abdeckplatte 13 in Richtung Kopfstützen 6 verschoben, bis diese in etwa niveaugleich und bündig mit dem umgebenden Fahrzeugboden 7 abschließt, wodurch die Kopfstützen 6 vollständig abgedeckt werden.

Wie dies aus der Fig. 2 ferner ersichtlich ist, sind die Platte 13, die Sitzlehne 5 und das Sitzteil 4 in dieser in der Lademulde 8 versenkten Ladestellung 3 mit ihrer in Richtung Fahrzeuginnenraum weisenden Oberfläche in etwa niveaugleich mit dem Fahrzeugboden 7 ausgerichtet, so daß eine durchgehende und in etwa waagrechte Ladeebene 17 ausgebildet wird.

Für den Übergang aus der Ladestellung 3 in die Sitzgebrauchsstellung 2 kann dann der eben beschriebene Vorgang wieder umgekehrt werden.

Die Platte 13 ist in ihrer in der Fig. 2 dargestellten Gebrauchsposition 18 und in ihrer in der linken und mittleren Darstellung der Fig. 1 dargestellten Nichtgebrauchsposition 19 sowie in Zwischenpositionen dazu z. B. durch Verrastungen und/oder Verriegelungen lösbar festlegbar, was hier allerdings nicht dargestellt ist. Die Platte 13 ist dabei vorzugsweise aus einem Kunststoff hergestellt. Alternativ dazu kann die Platte 13 aber auch durch eine stabile Folie gebildet sein.

### BEZUGSZEICHENLISTE

- 1: Sitzanordnung
- 2: Sitzgebrauchsstellung
- 3: Ladestellung
- 4: Sitzteil
- 5: Sitzlehne
- 6: Kopfstütze
- 7: Fahrzeugboden
- 8: Lademulde
- 9: Pfeil
- 10: Pfeil
- 11: Wickelposition
- 12: Führungseinrichtung
- 13: Platte
- 14: Sitzlehnenrückseite
- 15: Führungsschiene
- 16: Führungszapfen
- 17: waagrechte Ladeebene
- 18: Gebrauchsposition
- 19: Nichtgebrauchsposition

## Patentansprüche

1. Klappbare Sitzanordnung in einem Kraftfahrzeug, die ein Sitzteil, eine Sitzlehne sowie eine an der Sitzlehnenrückseite angeordnete Platte umfaßt, wobei die Sitzanordnung aus einer Sitzgebrauchsstellung in eine Ladestellung bringbar ist, in der die Sitzlehne in etwa waagrecht ausgerichtet ist und zusammen mit der aus ihrer Nichtgebrauchsposition in ihre Gebrauchsposition gebrachten Platte eine in etwa waagrechte Ladeebene ausbildet,
**dadurch gekennzeichnet,**
daß die Platte (13) verschiebbar an der Sitzlehnenrückseite (14) angeordnet ist.

2. Sitzanordnung nach Anspruch 1, **dadurch gekennzeichnet,** daß in der Ladestellung (3) wenigstens die Sitzlehne (5), vorzugsweise Sitzlehne (5) und Sitzteil (4), mit in Richtung Fahrzeuginnenraum weisender Platte (13) in etwa waagrecht ausgerichtet in einer Lademulde (8) des Fahrzeugbodens (7) aufgenommen ist.

3. Sitzanordnung nach Anspruch 2, **dadurch gekennzeichnet,**
daß an der Sitzlehnenoberseite wenigstens eine Kopfstütze (6) angeordnet ist, und daß die Platte (13) als Abdeckplatte in der Ladestellung (3) der Sitzanordnung (1) in etwa waagrecht in Richtung Kopfstützen (6), vorzugsweise bis in den Bereich des die Lademulde (8) umgebenden Fahrzeugbodens (7), verschiebbar ist dergestalt, daß diese den Bereich der Kopfstützen (6) abdeckt und in Verbindung mit wenigstens der waagrecht ausgerichteten Sitzlehne (5) die in etwa waagrechte Ladeebene (17) ausbildet.

4. Sitzanordnung nach Anspruch 2 oder Anspruch 3, **dadurch gekennzeichnet,** daß die Sitzlehne (5) und die an der Sitzlehnenrückseite (14) verschiebbar anliegende Platte (13) sowie ggf. das Sitzteil (4) in der in der Lademulde (8) versenkten Ladestellung (3) mit ihrer in Richtung Fahrzeuginnenraum weisenden Oberfläche in etwa niveaugleich mit dem Fahrzeugboden (7) ausgerichtet sind.

5. Sitzanordnung nach einem der Ansprüche 2 bis 4, **dadurch gekennzeichnet,** daß die Lademulde (8) im hinteren Fahrzeugbodenbereich, vorzugsweise im Bereich einer zweiten und/oder dritten Sitzreihe, ausgebildet ist und in der Breiten- und Längserstreckung der jeweiligen darin versenkbaren Sitzanordnung (1) angepaßt ist.

6. Sitzanordnung nach einem der Ansprüche 2 bis 5, **dadurch gekennzeichnet,** daß die Sitzanordnung (1) eine ein- oder mehrteilige Rücksitzbank, vorzugsweise in der Art einer Wickelsitzanordnung ist.

7. Sitzanordnung nach einem der Ansprüche 2 bis 6, **dadurch gekennzeichnet,** daß zur Überführung der Sitzanordnung (1) aus der Sitzgebrauchsstellung (2) in die Ladestellung (3) eine Führungseinrichtung (12) vorgesehen ist mit wenigstens einem fahrzeugaufbauseitigen Führungselement (15) und wenigstens einem entsprechend zugeordneten sitzanordnungsseitigem Führungselement (16).

8. Sitzanordnung nach Anspruch 7, **dadurch gekennzeichnet,** daß das wenigstens eine fahrzeugaufbauseitige Führungselement eine sich entlang einer Seite der Lademulde (8) wenigstens über einen Teilbereich derselben erstreckende Führungsschiene (15) ist, vorzugsweise eine sich über die gesamte Lademuldenlänge erstreckende und nach hinten leicht schräg abfallende Führungsschiene (15) ist, in der das wenigstens eine sitzanordnungsseitige Führungselement, vorzugsweise ein seitlich an einem vorderen Sitzteilende angeordneter Führungszapfen (16), verschiebbar gehalten und geführt ist.

9. Sitzanordnung nach einem der Ansprüche 1 bis 8, **dadurch gekennzeichnet,** daß die Platte (13) an der Sitzlehnenrückseite (14) anliegt und sich wenigstens über einen Teilbereich der Sitzlehnenrückseite (14) erstreckt sowie vorzugsweise im wesentlichen rechteckförmig ausgebildet ist.

10. Sitzanordnung nach einem der Ansprüche 1 bis 9, **dadurch gekennzeichnet,** daß die Platte (13) in sitzlehnenseitigen Führungen verschiebbar gehalten ist.

11. Sitzanordnung nach einem der Ansprüche 1 bis 10, **dadurch gekennzeichnet,** daß die Platte (13) in ihrer Gebrauchsposition (18) und/oder in ihrer Nichtgebrauchsposition (19) und/oder in Zwischenpositionen dazu lösbar festlegbar ist, vorzugsweise verrast- und/oder verriegelbar.

12. Sitzanordnung nach einem der Ansprüche 1 bis 11, **dadurch gekennzeichnet,** daß die Platte (13) aus Kunststoff hergestellt ist.
